# EUROPÄISCHE PATENTSCHRIFT

(11) **EP 3 471 011 B1**
(45) Veröffentlichungstag und Bekanntmachung des Hinweises auf die Patenterteilung: **24.12.2025**
(21) Anmeldenummer: 18198142.4
(22) Anmeldetag: 02.10.2018
(51) Int. Cl.: G06F 21/62, H04L 9/40

(54) **SYSTEM UND VERFAHREN ZUM VERWALTEN VON PERSONENBEZOGENEN DATEN**
SYSTEM AND METHOD FOR MANAGING PERSONAL DATA
SYSTÈME ET PROCÉDÉ DE GESTION DE DONNÉES À CARACTÈRE PERSONNEL

(30) Priorität: 11.10.2017 DE 102017123671
(43) Veröffentlichungstag der Anmeldung: 17.04.2019
(73) Patentinhaber: Bundesdruckerei GmbH, 10969 Berlin (DE)
(72) Erfinder: WILKE, Andreas, 13509 Berlin (DE); FLORIAN, Martin, 13357 Berlin (DE); KOMAROV, Ilya, 13507 Berlin (DE)
(74) Vertreter: Patentship Patentanwaltsgesellschaft mbH

(56) Entgegenhaltungen:
- WO-A2-2008/110597
- US-A1- 2009 070 571
- US-A1- 2014 101 453
- US-B1- 6 678 821

## Beschreibung

An geschützten Bereichen, wie beispielsweise Sicherheitsschleusen von zu sichernden Gebäuden, wie wissenschaftlichen Einrichtungen oder Bürogebäuden, finden häufig Personenauthentifizierungen statt. Hierzu werden personenbezogene Daten, wie beispielsweise ein Personalausweis, aber auch elektronische Daten wie ein Token erfasst. Diese erfassten personenbezogenen Daten können gespeichert werden.

Gespeicherte personenbezogene Daten auszuwerten, erfordert Sicherheitsvorkehrungen, um diese personenbezogenen Daten nicht in Hände von unberechtigten Dritten gelangen zu lassen und so einen Missbrauch der personenbezogenen Daten auszuschließen.

Die Offenlegungsschrift US 2014/101453 A1 offenbart eine biometrische Authentifizierungsvorrichtung, welche einen Fingerabdrucksensor umfasst.

Die Patentschrift US 6,678,821 B1 offenbart ein Verschlüsselungs/Entschlüsselungssystem.

Die Offenlegungsschrift WO 2008/110597 A2 offenbart ein Verfahren zur Authentifizierung einer Person.

Es ist Aufgabe der vorliegenden Erfindung, ein verbessertes Konzept zum Verwalten von personenbezogenen Daten aufzuzeigen.

Die Aufgabe wird gemäß einem ersten Aspekt der Erfindung durch ein System zum Verwalten von personenbezogenen Daten, die Identitäten zugeordnet sind, gelöst. Das System weist eine erste Sicherheitseinrichtung und eine zweite Sicherheitseinrichtung auf, die jeweils dazu eingerichtet sind, personenbezogene Daten zu erfassen und Identitäten zuzuordnen und die erfassten personenbezogenen Daten lokal zu speichern. Das System weist ein Verwaltungssystem auf, das dazu eingerichtet ist, Berechtigungen zu den Identitäten zu verwalten. Die erste Sicherheitseinrichtung und die zweite Sicherheitseinrichtung sind dazu eingerichtet jeweils Zugriffe auf lokal gespeicherte personenbezogene Daten lokal zu protokollieren.

Das System kann ein Authentifizierungssystem sein. Die Sicherheitseinrichtungen können eine Erfassungsvorrichtung zum Erfassen von personenbezogenen Daten umfassen, wie beispielsweise eine Kamera zum Erfassen von biometrischen Daten oder von einem Ausweisdokument, ein Eingabefeld zum Eingeben einer alphanumerischen Zeichenfolge oder ein Funkmodul zum Erfassen von Daten aus einem elektronischen Chip.

Erfasste personenbezogene Daten werden anonymisiert und Identitäten zugeordnet. Eine Identität ist einer Person zugeordnet. Eine Identität kann einen zu einer Person gehörenden Datensatz umfassen, wie beispielsweise einen Namen oder eine Personalnummer. Zu jeder Identität können Berechtigungen vorliegen und verwaltet werden. Die Verwaltung wird durch das Verwaltungssystem ausgeführt. Das Verwaltungssystem kann an einem zentralen Ort, wie beispielsweise einem Server, eingerichtet sein und mit den einzelnen Sicherheitseinrichtungen, beispielsweise der ersten Sicherheitseinrichtung und der zweiten Sicherheitseinrichtung, verbunden sein. Die Verbindung kann über ein Datennetzwerk erfolgen. Die erste und die zweite Sicherheitseinrichtung können auch über dieses oder ein anderes Datennetzwerk miteinander verbunden sein.

Das Verwaltungssystem verwaltet Berechtigungen zu den Identitäten. Das heißt, Berechtigungen von Identitäten, die personenbezogene Daten betreffen, werden in dem Verwaltungssystem hinterlegt. Jede Sicherheitseinrichtung kann über das Datennetzwerk auf das Verwaltungssystem zugreifen und Berechtigungen zu den Identitäten überprüfen.

So kann bestimmt werden, ob die erfassten personenbezogenen Daten verarbeitet und/oder lokal gespeichert werden dürfen. Weitere Berechtigungen, die ein Benutzer zu der Identität vergeben kann, ist der Zugriff anderer Identitäten und der Sicherheitseinrichtungen auf die erfassten personenbezogenen Daten dieser Identität.

Die erste Sicherheitseinrichtung und die zweite Sicherheitseinrichtung sind dazu eingerichtet, Zugriffe auf lokal gespeicherte personenbezogene Daten lokal zu protokollieren. Das Erstellen eines Protokolls zu jedem Zugriff schafft einen Überblick über die Zugriffe, die auf die personenbezogenen Daten erfolgt sind, und über Zugriffsversuche. Dies kann unabhängig davon erfolgen, von wem der Zugriff ausgeführt wurde.

Hierdurch kann ein Administrator beim Überprüfen einer Identität, aber auch eine Person beim Überprüfen ihrer eigenen Identität, Informationen darüber erhalten, wer Zugriff auf die personenbezogenen Daten erlangen wollte oder erlangt hat.

Gemäß einer vorteilhaften Ausgestaltung sind die erste Sicherheitseinrichtung und die zweite Sicherheitseinrichtung räumlich getrennt angeordnet.

Teile des Systems sind räumlich getrennt angeordnet, das heißt, das System ist auf unterschiedliche Standorte, sogenannte Knoten, aufgeteilt. Bei den unterschiedlichen Standorten handelt es sich beispielsweise um verschiedene Eingänge eines Gebäudes oder unterschiedliche Vereinzelungsanlagen an einem Eingang des Gebäudes. Die Sicherheitseinrichtungen können jeweils über ein Datennetzwerk miteinander verbunden sein. Die unterschiedliche Anordnung der ersten Sicherheitseinrichtung und der zweiten Sicherheitseinrichtung kann so ein dezentrales Netzwerk bilden.

Gemäß einer vorteilhaften Ausgestaltung sind die erste Sicherheitseinrichtung und die zweite Sicherheitseinrichtung dazu ausgestaltet, die Zugriffe in Abhängigkeit der Berechtigungen zu den personenbezogenen Daten zu erlauben.

Dies betrifft die Identitäten, zu denen die Berechtigungen vorliegen. Es werden lediglich Zugriffe zu personenbezogenen Daten gestattet, die Identitäten zugeordnet sind, zu denen Berechtigungen für einen Zugriff vorliegen. Dies erhöht die Privatsphäre der zu den Identitäten gehörenden Personen und erhöht zusätzlich die Datensicherheit des Systems.

Gemäß einer weiteren vorteilhaften Ausgestaltung sind die erste Sicherheitseinrichtung und die zweite Sicherheitseinrichtung dazu eingerichtet, die protokollierten Zugriffe in einer abgesicherten Struktur, insbesondere einer Blockchain-Struktur, lokal abzuspeichern.

Die Protokolle umfassen Zugriffsinformationen, die sicherheitsrelevante Daten umfassen können. Das Speichern der Protokolle in einer gesicherten Struktur erhöht die Sicherheit des Systems.

Gemäß einer weiteren vorteilhaften Ausgestaltung sind die erste Sicherheitseinrichtung und die zweite Sicherheitseinrichtung dazu eingerichtet, die erfassten personenbezogenen Daten lokal und anonymisiert zu speichern.

Vorteilhaft hierbei ist es, dass die Daten, nachdem sie anonymisiert wurden, von unberechtigten Dritten nicht mehr offensichtlich einer Person zugeordnet werden können. Dies erhöht die Sicherheit des Systems und die Privatsphäre der Personen. Das lokale Speichern der anonymisierten personenbezogenen Daten erspart einen Umweg zum Anonymisieren über eine zentrale Instanz, wie einen Server, um die gesammelten personenbezogenen Daten zu anonymisieren.

Gemäß einer weiteren vorteilhaften Ausgestaltung sind die erste Sicherheitseinrichtung und die zweite Sicherheitseinrichtung dazu eingerichtet, die erfassten personenbezogenen Daten einem Operator freizugeben.

Durch die Freigabe werden die personenbezogenen Daten an einen Operator weitergegeben. Der Operator kann ein Datenanalyst sein, d.h. eine Person oder Entität, die personenbezogene Daten auswertet, aber auch ein hierfür eingerichtetes Softwaremodul. Hierbei können die Daten zum Lesen bereitgestellt werden, oder die Daten werden von einer der Sicherheitseinrichtungen an den Operator gesendet. Die Freigabe, bzw. Weitergabe kann hierbei anonymisiert stattfinden, was den Schutz des Systems weiter erhöht. Die weitergegebenen personenbezogenen Daten können dann von dem Operator ausgewertet werden.

Gemäß einer weiteren vorteilhaften Ausgestaltung sind die erste Sicherheitseinrichtung und die zweite Sicherheitseinrichtung dazu eingerichtet, die personenbezogenen Daten in Abhängigkeit einer Berechtigung zu Anonymisieren, die der Identität zuordenbar ist, der die personenbezogenen Daten zugeordnet sind.

Durch die Berechtigungserteilung zur Anonymisierung der personenbezogenen Daten durch die Identität der Person, der die personenbezogenen Daten zuordenbar sind, wird die Sicherheit der personenbezogenen Daten und die Privatsphäre der Person erhöht. Die Zuordnung zu der Person kann nicht mehr ohne weiteres erfolgen. Somit weiß eine andere Identität oder ein Operator nicht, zu welcher Person die anonymisierten Daten gehören. Vorteilhaft hierbei ist es, dass die Identität, der die personenbezogenen Daten zugeordnet sind, selbständig Kontrolle darüber hat, wer die personenbezogenen Daten anonymisiert sehen darf.

Gemäß einer vorteilhaften Ausgestaltung ist das Verwaltungssystem dazu eingerichtet, die Berechtigungen basierend auf einer Erlaubnis einer Identität zu verwalten.

Die Verwaltung der Berechtigungen kann hierbei durch jede Identität separat festgelegt werden. D. h., jede Person, die eine Identität hinterlegt hat, also eine Person, die das System benutzt oder verwaltet, kann Berechtigungen bezüglich der personenbezogenen Daten, die ihre eigene Identität betrifft, separat festlegen. Dies erhöht die Rechte der Person, die der Identität zugehörig ist, da sie selber Freigaben und Verbote festlegen kann.

Gemäß einer vorteilhaften Ausgestaltung ist das Verwaltungssystem dazu eingerichtet ist, die Berechtigungen und Identitäten der ersten Sicherheitseinrichtung und/oder der zweiten Sicherheitseinrichtung freizugeben.

Die Berechtigungen werden von dem Verwaltungssystem verwaltet. Es ist Aufgabe des Verwaltungssystems, die Berechtigungen und die Identitäten an die erste Sicherheitseinrichtung und die zweite Sicherheitseinrichtung, d. h. an die dezentralen Knoten des Systems, zu verteilen. Somit weiß jede Sicherheitseinrichtung, welche Identitäten es gibt und welche Berechtigungen zu jeder Identität vorliegen.

Gemäß einer vorteilhaften Ausgestaltung ist das Verwaltungssystem dazu eingerichtet, Berechtigungen und Identitäten mit einem Zertifikat zu versehen. Des Weiteren sind die erste Sicherheitseinrichtung und die zweite Sicherheitseinrichtung jeweils dazu eingerichtet, Zertifikate von abgerufenen oder empfangenen Berechtigungen und/oder Identitäten zu überprüfen.

Die Sicherheitseinrichtungen können Controller aufweisen. Die Controller überprüfen, ob die Berechtigungen und die Identitätsinformationen tatsächlich von dem Verwaltungssystem kommen. Hierzu werden die Daten von dem Verwaltungssystem mit einem Zertifikat versehen, das von dem Controller überprüft werden kann. Dies erhöht die Sicherheit.

Gemäß einer vorteilhaften Ausgestaltung sind die erste Sicherheitseinrichtung und die zweite Sicherheitseinrichtung jeweils dazu eingerichtet, eine Antwort auf eine Anfrage zu verweigern, wenn die Anfrage kein Zertifikat umfasst, das von der ersten Sicherheitseinrichtung und/oder der zweiten Sicherheitseinrichtung authentifizierbar ist.

Die Sicherheit wird weiter erhöht, wenn die Sicherheitseinrichtungen keine Informationen und personenbezogene Daten an einen Absender einer nicht zertifizierten Anfrage senden.

Gemäß einer vorteilhaften Ausgestaltung sind die erste Sicherheitseinrichtung und die zweite Sicherheitseinrichtung dazu eingerichtet, zu lokal gespeicherten personenbezogenen Daten zusätzlich Informationen, insbesondere ein Zertifikat oder eine Identitätsnummer, zu der Identität abzuspeichern, die den personenbezogenen Daten zuordenbar ist.

Auf diese Weise lässt sich der Besitzer der Datensätze erfassen. Der Besitzer der Datensätze kann beispielsweise die Identität sein, der die personenbezogenen Daten zugeordnet werden können.

Gemäß einer vorteilhaften Ausgestaltung ist das Verwaltungssystem dazu eingerichtet ist, die verwalteten Berechtigungen in Bezug auf einen Operator, insbesondere eine Identität oder eine Prozess, zu verwalten.

Ein Operator kann beispielsweise eine Identität, aber auch ein auf dem dezentralen Netzwerk ausgeführter Prozess sein. Dies erlaubt einen automatisierten Zugriff auf personenbezogene Daten innerhalb des Systems.

Die Aufgabe wird gemäß einem zweiten Aspekt der Erfindung durch ein Verfahren zum Verwalten von personenbezogenen Daten gelöst, wobei die personenbezogenen Daten Identitäten zugeordnet sind. Das Verfahren weist die folgenden Schritte auf:
- Erfassen von personenbezogenen Daten durch eine erste Sicherheitseinrichtung oder eine zweite Sicherheitseinrichtung, Zuordnen der erfassten personenbezogenen Daten zu Identitäten und lokales Speichern der erfassten personenbezogenen Daten durch die erste Sicherheitseinrichtung, wenn die erste Sicherheitseinrichtung die personenbezogenen Daten erfasst hat oder die zweite Sicherheitseinrichtung, wenn die zweite Sicherheitseinrichtung die personenbezogenen Daten erfasst hat,
- Verwalten von Berechtigungen zu den Identitäten durch ein Verwaltungssystem,
- Protokollieren von Zugriffen auf lokal gespeicherte personenbezogene Daten durch die erste Sicherheitseinrichtung und die zweite Sicherheitseinrichtung.

Gemäß einem dritten Aspekt wird die Erfindung durch ein Computer-Programm-Produkt mit einem Programmcode zur Ausführung des oben beschriebenen Verfahrens gelöst, wenn der Programmcode auf einem Computersystem ausgeführt wird.

Die Erfindung wird im Folgenden anhand von weiteren Ausführungsbeispielen und den Figuren näher erläutert. Es zeigen:
- Fig. 1: eine schematische Darstellung eines Systems gemäß einer Ausgestaltung der Erfindung; und
- Fig. 2: ein schematisches Flussdiagramm für ein Verfahren gemäß einer Ausgestaltung der Erfindung.

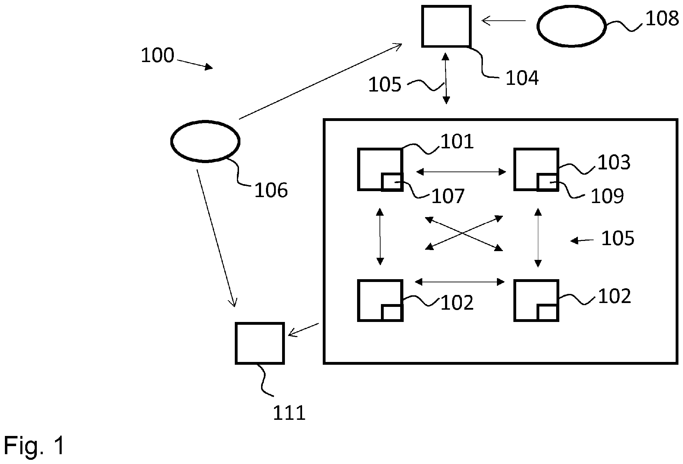

Fig. 1 zeigt ein System 100. Bei dem System 100 handelt es sich in dem gezeigten Ausführungsbeispiel um eine Sicherheitsschleuse. Das System 100 weist eine erste Sicherheitseinrichtung 101 und eine zweite Sicherheitseinrichtung 103 auf. Die erste Sicherheitseinrichtung 101 und die zweite Sicherheitseinrichtung 103 sind über ein Datennetzwerk 105 miteinander verbunden und bilden somit ein dezentrales Netzwerk. Das System 100 weist weitere Sicherheitseinrichtungen 102 auf, die im Wesentlichen der ersten Sicherheitseinrichtung 101 und der zweiten Sicherheitseinrichtung 103 entsprechen. Aus Gründen der Übersichtlichkeit wird das System 100 im Folgenden anhand der ersten Sicherheitseinrichtung 101 und der zweiten Sicherheitseinrichtung 103 beschrieben. Die Ausführungen gelten entsprechend auch für jede der im System 100 angeordneten weiteren Sicherheitseinrichtung 102. In einer alternativen Ausgestaltung umfasst das System 100 nur die erste Sicherheitseinrichtung 101 und die zweite Sicherheitseinrichtung 103.

Die erste Sicherheitseinrichtung 101 weist einen Speicher 107 auf und die zweite Sicherheitseinrichtung weist einen Speicher 109 auf. Die erste Sicherheitseinrichtung 101 ist dazu eingerichtet, Daten in dem ersten Speicher 107 zu speichern. Die zweite Sicherheitseinrichtung 103 ist dazu eingerichtet, Daten in dem zweiten Speicher 109 zu speichern. Die Speicher 107, 109 sind jeweils an der zugehörigen ersten, bzw. zweiten Sicherheitseinrichtung 101, 103 angeordnet. Die Speicherung der personenbezogenen Daten von der ersten Sicherheitseinrichtung 101 erfolgt somit lokal bei dem ersten Speicher 107. Die Speicherung der erfassten personenbezogenen Daten durch die zweite Sicherheitseinrichtung 103 erfolgt ebenfalls lokal im Speicher 109.

Die erste Sicherheitseinrichtung 101 speichert zusätzlich in dem Speicher 107 lokal ein Protokoll. Die zweite Sicherheitseinrichtung 103 speichert ebenfalls lokal im Speicher 109 ein Protokoll.

Im Folgenden wird die Protokollierung anhand der Sicherheitseinrichtung 101 und des ersten Speichers 107 genauer beschrieben. Dies soll jedoch nicht einschränkend sein und für die zweite Sicherheitseinrichtung 103 mit dem zweiten Speicher 109 ebenso gelten, wie für die weiteren Sicherheitseinrichtungen 102 und den diesen entsprechend zugeordneten Speichern.

Das System 100 ist dazu eingerichtet, Personen zu authentifizieren und so eine Sicherheit für den zu schützenden Bereich, also das Gebäude, zu gewährleisten. Hierzu ist jeder Person eine Identität 106 zugeordnet, die Datensätze der Person umfasst, wie beispielsweise einen Personennamen und/oder eine Personalnummer. Im Folgenden kann sich die Person in dem System 100 authentifizieren, wobei die hierbei anfallenden personenbezogenen Daten anonymisiert der Identität 106 zugeordnet werden, so dass Dritte aus den gespeicherten personenbezogenen Daten nicht ohne Weiteres in Erfahrung bringen können, zu welcher Person die Identität 106 gehört.

Die erste Sicherheitseinrichtung 101 ist mit einem Verwaltungssystem verbunden. Aus Gründen der Übersichtlichkeit ist das Verwaltungssystem in Fig. 1 nicht dargestellt. Im gezeigten Ausführungsbeispiel handelt es sich bei dem Verwaltungssystem um ein Softwaremodul, das auf einem Computersystem ausführbar ist und auf einem Server 104 ausgeführt wird. In einer weiteren Ausgestaltung wird das Verwaltungssystem auf der ersten Sicherheitseinrichtung 101 oder mehreren, insbesondere allen Sicherheitseinrichtungen 101, 102, 103 ausgeführt. In einer alternativen Ausgestaltung kann es sich aber auch um eine andere Implementierung handeln, die dazu eingerichtet ist Informationen zu personenbezogenen Daten zu verwalten, wie beispielsweise eine Hardware-Implementierung.

Das Verwaltungssystem ist so eingerichtet, dass personenbezogene Daten einer Identität 106 zugeordnet werden können, und Personen, die zu der Identität 106 gehören, Berechtigungen über die personenbezogenen Daten ihrer Identität 106 separat und individuell verwalten können. D. h., eine Person, die sich in dem System 100 registriert und eine Identität 106 besitzt, kann zu ihrer Identität 106 bezüglich ihrer personenbezogenen Daten Berechtigungen hinterlegen. Eine solche Berechtigung kann umfassen, welche Sicherheitseinrichtung 101, 102, 103 was mit den personenbezogenen Daten machen darf. Die Berechtigungen können auch umfassen, wie weitere Computersysteme mit Zugriff auf das System 100, aber auch wie andere Identitäten und Prozesse des Systems 100 mit den personenbezogenen Daten umgehen dürfen. Beispielsweise kann die Person eine Berechtigung zum lokalen Speichern der personenbezogenen Daten auf der ersten Sicherheitseinrichtung 101 erteilen. Die personenbezogenen Daten dürfen dann von der ersten Sicherheitseinrichtung 101 im lokalen ersten Speicher 107 gespeichert werden. Weitere Berechtigungen, die vergeben werden können, sind beispielsweise eine Freigabe zum Weiterleiten der personenbezogenen Daten, um sie zentral oder dezentral zu verarbeiten. Eine solche Freigabe kann allgemein erfolgen, aber auch speziell für ausgewählte andere Identitäten. Eine solche ausgewählte andere Identität kann beispielsweise ein Arbeitskollege, ein Personalchef oder ein Administrator des Systems 100 aber auch ein Prozess des Systems 100 sein.

Berechtigungen können für bestimmte Operatoren 108 oder Benutzer oder auch für eine bestimmte Sicherheitseinrichtung 101, 102, 103 des dezentralen Netzwerks erteilt werden. Der Operator 108 ist im Ausführungsbeispiel ein Prozess oder eine Identität. Eine Berechtigung kann die Berechtigung des lokalen Speicherns der erfassten personenbezogenen Daten, denen diese Identität 106 zugeordnet ist, umfassen. Dem Verwaltungssystem können auch Zugriffsberechtigungen vorliegen, d. h. dass die zu der Identität 106 gehörenden personenbezogenen Daten von einem Operator 108 oder einer anderen Identität ausgelesen werden können. Diese Berechtigungen sind in dem Verwaltungssystem zu der jeweiligen Identität 106 gespeichert.

Das Verwaltungssystem ist dezentral angeordnet und im Ausführungsbeispiel auf einem Server ausgeführt, der mit jeder der Sicherheitseinrichtungen 101, 102, 103 über das Datennetzwerk 105 verbunden ist. In einer alternativen Ausgestaltung ist das Verwaltungssystem auf jeder Sicherheitseinrichtung 101, 102, 103 des dezentralen Netzwerks separat gespeichert und ausgeführt. In diesem Fall werden die Berechtigungen lokal an jeder Sicherheitseinrichtung 101, 102, 103 lokal gespeichert. Eine Übermittlung der Berechtigungen erfolgt dann über das dezentrale Netzwerk von einem Verwaltungssystem einer Sicherheitseinrichtung 101, 102, 103 an ein anderes Verwaltungssystem einer anderen Sicherheitseinrichtung 101, 102, 103.

Liegen neue Berechnungen und Identitäten vor, so schickt das Verwaltungssystem die Berechtigungen oder Identitäten an jede einzelne Sicherheitseinrichtung 101, 102, 103 des dezentralen Netzwerks. Dies erfolgt im Ausführungsbeispiel, ohne dass die einzelnen Sicherheitseinrichtungen 101, 102, 103 an den einzelnen Knoten diese Daten von dem Verwaltungssystem anfragen. In einer weiteren Ausgestaltung erfolgt das Senden neuer oder aller Berechtigungen und Identitäten erst auf eine Anfrage durch die erste Sicherheitseinrichtung 101, die zweite Sicherheitseinrichtung 103 oder eine weitere Sicherheitseinrichtung 102.

Greift der Operator 108, also ein Prozess oder eine Identität, auf personenbezogene Daten zu der Identität 106 zu, so erfasst die erste Sicherheitseinrichtung 101, in der die personenbezogenen Daten gespeichert sind, dass ein Zugriff auf die personenbezogenen Daten verlangt wird und wer den Zugriff auf die personenbezogenen Daten verlangt, und speichert dies in einem Protokoll, unabhängig davon, ob die personenbezogenen Daten gesendet oder nicht gesendet werden. Hierzu erstellt die erste Sicherheitseinrichtung 101 lokal ein Protokoll-Log in dem Speicher 107. Zusätzlich werden auch Informationen darüber gespeichert, ob, und falls ja, welche personenbezogenen Daten betreffend welche Identität 106 freigegeben wurden.

Anfragen des Operators 108 zu personenbezogenen Daten erfolgen im gezeigten Ausführungsbeispiel über das Verwaltungssystem. Der Operator 108 schickt hierzu dem Verwaltungssystem eine Aufforderung, personenbezogene Daten zu der Identität 106 bereitzustellen. Das Verwaltungssystem leitet diese Anfragen an die erste Sicherheitseinrichtung 101 weiter, die diese personenbezogenen Daten entsprechend der Berechtigungen dem Verwaltungssystem und somit dem Operator 108 bereitstellt. Dieser Vorgang wird von der ersten Sicherheitseinrichtung 101 im zugehörigen lokalen Speicher 107 protokolliert.

In einer weiteren Ausgestaltung fragt der Operator 108 die gewünschten personenbezogenen Daten direkt bei der ersten Sicherheitseinrichtung 101 an. In einer weiteren Ausgestaltung werden die personenbezogenen Daten nicht dem Verwaltungssystem, sondern dem Operator 108 direkt gesendet.

Das System 100 weist des Weiteren einen Datentresor 111 auf. Der Datentresor 111 hat einen separaten Speicherplatz zu jeder der hinterlegten Identitäten 106. Die Datensätze der Sicherheitseinrichtungen 101, 102, 103, die jeweils lokal in dem ersten Speicher 107 oder dem zweiten Speicher 109 gespeichert sind, werden auch in dem Datentresor 111 zur jeweiligen Identität 106 hinterlegt. Eine solche Hinterlegung kann beispielsweise zeitabhängig an bestimmten Tagen nach bestimmten Zeiträumen oder aber auch auf Anfragen hin erfolgen.

Der Datentresor 111 kann eine Festplatte oder eine andere Speichereinrichtung sein, die eine hohe Sicherheit aufweist. Personenbezogene Daten können hierbei lediglich von den Sicherheitseinrichtungen 101, 102, 103 ausgelesen werden. Zusätzlich können die einzelnen Identitäten 106 ihnen zugeordnete personenbezogene Daten aus dem Datentresor 111 auslesen. Das Verwaltungssystem oder einzelne Operatoren 108 haben keinen direkten Zugriff auf den Datentresor 111. So ist sichergestellt, dass kein Zugriff von unberechtigten Dritten über den Datentresor 111 direkt auf die personenbezogenen Daten zu einer Identität 106 stattfindet. Vielmehr muss jede Anfrage über das dezentrale Netzwerk und das Verwaltungssystem an die einzelnen Knoten, d. h. die Sicherheitseinrichtungen 101, 102, 103, gerichtet werden.

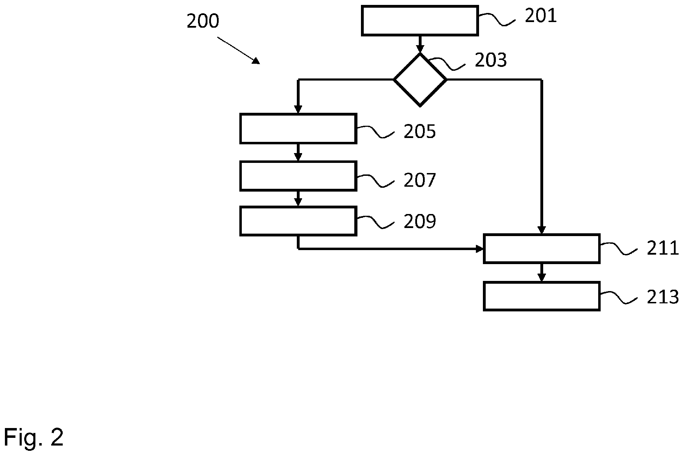

Fig. 2 zeigt ein Flussdiagramm 200 für ein Verfahren gemäß einer Ausgestaltung der Erfindung. Schritt 201 zeigt eine Anfrage eines Operators 108 an das Verwaltungssystem zur Herausgabe von personenbezogenen Daten betreffend die Identität 106. In einem zweiten Schritt überprüft das Verwaltungssystem, ob Berechtigungen zu der Identität 106 vorliegen.

In einer alternativen Ausgestaltung fragt der Operator 108 die personenbezogenen Daten nicht über das Verwaltungssystem, sondern an der ersten Sicherheitseinrichtung 101 direkt ab. In diesem Fall wird im Schritt 203 das Überprüfen der Berechtigungen von der ersten Sicherheitseinrichtung 101 ausgeführt. Die erste Sicherheitseinrichtung 101 sendet hierzu eine Anfrage an das Verwaltungssystem.

Liegen keine Berechtigungen zur Herausgabe von personenbezogenen Daten zu der Identität 106 vor, so wird das Verfahren im Schritt 211 fortgesetzt. Hierbei kann dem Operator 108 noch eine Fehlermeldung oder eine negative Antwort ausgegeben werden.

Liegt hingegen eine Berechtigung vor, d. h. ist der Schritt 203 positiv bewertet worden, so wird im Schritt 205 die Anfrage an die erste Sicherheitseinrichtung 101 weitergeleitet. Stellt alternativ der Operator 108 die Anfrage direkt an die erste Sicherheitseinrichtung 101, so wird diese dort direkt verarbeitet und eine Berechtigungsanfrage automatisch von dem Verwaltungssystem eingeholt.

Im Schritt 207 überprüft die erste Sicherheitseinrichtung 101 ein Zertifikat der von dem Verwaltungssystem erhaltenen Daten, d.h. von den Berechtigungen und Identitätsinformationen. Wird das überprüfte Zertifikat von der ersten Sicherheitseinrichtung 101 für ungültig angesehen und somit nicht authentifiziert, wird das Verfahren abgebrochen und keine Antwort an das Verwaltungssystem gesendet. Wird das Zertifikat hingegen authentifiziert und für gültig erklärt, wird das Verfahren im Schritt 209 fortgeführt.

Im folgenden Schritt 209 werden die personenbezogenen Daten, die die Identität 106 betreffen, aus dem ersten Speicher 107 ausgelesen.

Sowohl nach Schritt 209 als auch alternativ nach dem Schritt 203 wird ein Protokoll im Schritt 211 erstellt, das Informationen über Anfragen bereitstellt, die über die erste Sicherheitseinrichtung 101 getätigt wurden. Das Protokoll umfasst hierbei, zu welcher Identität 106 aufgrund welcher Berechtigungen welche personenbezogenen Daten wann herausgegeben wurden. In einer weiteren Ausgestaltung können weitere Informationen in dem Protokoll hinterlegt sein, wie beispielsweise ein Identifikationscode des Operators 108, der die personenbezogenen Daten angefragt hat.

In einem folgenden Schritt 213 werden die Protokolldaten von der ersten Sicherheitseinrichtung 101 lokal in einer Datei, einem sogenannten Log, gespeichert. Der Speicher ist hierbei ebenfalls der erste Speicher 107. Alternativ kann es sich um einen anderen lokalen Speicher handeln.

Das Protokoll wird in der beschriebenen Ausgestaltung in einer Blockchain-Struktur gespeichert, um die Sicherheit und die Integrität der gespeicherten Protokolle und Daten zu erhöhen.

Sind personenbezogene Daten zu der Identität 106 auf mehrere als einen Knoten verteilt, also in unterschiedlichen Speichern 107, 109 gespeichert, so werden die Schritte 207 bis 213 nicht nur von der ersten Sicherheitseinrichtung 101, sondern von jeder Sicherheitseinrichtung 101, 102, 103 ausgeführt, die entweder von dem Verwaltungssystem angesprochen oder von dem Operator 108 direkt angefragt wird.

### Bezugszeichenliste

- 100: System
- 101: erste Sicherheitseinrichtung
- 102: weitere Sicherheitseinrichtung
- 103: zweite Sicherheitseinrichtung
- 104: Server
- 105: Datennetzwerk
- 106: Identität
- 107: erster Speicher
- 108: Operator
- 109: zweiter Speicher
- 111: Datenspeicher
- 200: Flussdiagramm
- 201-213: Verfahrensschritt

## Patentansprüche

1. System (100) zum Verwalten von personenbezogenen Daten, die Identitäten (106) zugeordnet sind, mit:
einer ersten Sicherheitseinrichtung (101) und einer zweiten Sicherheitseinrichtung (103) die jeweils dazu eingerichtet sind, personenbezogene Daten zu erfassen und Identitäten (106) zuzuordnen und die erfassten personenbezogenen Daten lokal zu speichern; und
einem Verwaltungssystem, das dazu eingerichtet ist, Berechtigungen zu den Identitäten (106) zu verwalten;
wobei die erste Sicherheitseinrichtung (101) und die zweite Sicherheitseinrichtung (103) jeweils dazu eingerichtet sind, Zugriffe auf die lokal gespeicherten personenbezogenen Daten lokal zu protokollieren, wobei die erste Sicherheitseinrichtung (101) und die zweite Sicherheitseinrichtung (103) dazu eingerichtet sind, die Zugriffe in Abhängigkeit der Berechtigungen zu den personenbezogenen Daten zu erlauben.

2. System (100) nach Anspruch 1, wobei die erste Sicherheitseinrichtung (101) und die zweite Sicherheitseinrichtung (103) räumlich getrennt angeordnet sind.

3. System (100) nach einem der vorhergehenden Ansprüche, wobei die erste Sicherheitseinrichtung (101) und die zweite Sicherheitseinrichtung (103) dazu eingerichtet sind, die protokollierten Zugriffe in einer abgesicherten Struktur, insbesondere einer Blockchain-Struktur, lokal abzuspeichern.

4. System (100) nach einem der vorhergehenden Ansprüche, wobei die erste Sicherheitseinrichtung (101) und die zweite Sicherheitseinrichtung (103) dazu eingerichtet sind, die erfassten personenbezogenen Daten lokal und anonymisiert zu speichern.

5. System (100) nach einem der vorhergehenden Ansprüche, wobei die erste Sicherheitseinrichtung (101) und die zweite Sicherheitseinrichtung (103) dazu eingerichtet sind, die erfassten personenbezogenen Daten einem Operator (108) freizugeben.

6. System (100) nach einem der vorhergehenden Ansprüche, wobei die erste Sicherheitseinrichtung (101) und die zweite Sicherheitseinrichtung (103) dazu eingerichtet sind, die personenbezogenen Daten in Abhängigkeit einer Berechtigung zu Anonymisieren, die der Identität (106) zuordenbar ist, der die personenbezogenen Daten zugeordnet sind.

7. System (100) nach einem der vorhergehenden Ansprüche, wobei das Verwaltungssystem dazu eingerichtet ist, die Berechtigungen basierend auf einer Erlaubnis einer Identität (106) zu verwalten.

8. System (100) nach einem der vorhergehenden Ansprüche, wobei das Verwaltungssystem dazu eingerichtet ist, die Berechtigungen und Identitäten (106) der ersten Sicherheitseinrichtung (101) und/oder der zweiten Sicherheitseinrichtung (103) freizugeben.

9. System (100) nach einem der vorhergehenden Ansprüche, wobei das Verwaltungssystem dazu eingerichtet ist, Berechtigungen und Identitäten (106) mit einem Zertifikat zu versehen und wobei die erste Sicherheitseinrichtung (101) und die zweite Sicherheitseinrichtung (103) jeweils dazu eingerichtet sind, Zertifikate von abgerufenen oder empfangenen Berechtigungen und/oder Identitäten (106) zu authentifizieren.

10. System (100) nach Anspruch 9, wobei die erste Sicherheitseinrichtung (101) und die zweite Sicherheitseinrichtung (103) jeweils dazu eingerichtet sind, eine Antwort auf eine Anfrage zu verweigern, wenn die Anfrage kein Zertifikat umfasst, das von der ersten Sicherheitseinrichtung (101) und/oder der zweiten Sicherheitseinrichtung (101) authentifizierbar ist.

11. System (100) nach einem der vorhergehenden Ansprüche, wobei die erste Sicherheitseinrichtung (101) und die zweite Sicherheitseinrichtung (103) dazu eingerichtet sind, zu lokal gespeicherten personenbezogenen Daten zusätzlich Informationen zu der Identität (106) abzuspeichern, die den personenbezogenen Daten zuordenbar ist.

12. System (100) nach einem der vorhergehenden Ansprüche, wobei das Verwaltungssystem dazu eingerichtet ist, die verwalteten Berechtigungen in Bezug auf einen Operator (108), insbesondere eine Identität (106) oder eine Prozess, zu verwalten.

13. Verfahren zum Verwalten von personenbezogenen Daten, die Identitäten (106) zugeordnet sind, mit:
- Erfassen von personenbezogenen Daten durch eine erste Sicherheitseinrichtung (101) oder eine zweite Sicherheitseinrichtung (103), Zuordnen der erfassten personenbezogenen Daten zu Identitäten (106) und lokales Speichern der erfassten personenbezogenen Daten durch die erste Sicherheitseinrichtung (101), wenn die erste Sicherheitseinrichtung (101) die personenbezogenen Daten erfasst hat oder die zweite Sicherheitseinrichtung (102), wenn die zweite Sicherheitseinrichtung (101) die personenbezogenen Daten erfasst hat;
- Verwalten von Berechtigungen zu den Identitäten (106) durch ein Verwaltungssystem;
- lokales Protokollieren von Zugriffen auf die lokal gespeicherten personenbezogenen Daten durch die erste Sicherheitseinrichtung (101) und/oder die zweite Sicherheitseinrichtung (103), wobei die erste Sicherheitseinrichtung (101) und die zweite Sicherheitseinrichtung (103) dazu eingerichtet sind, die Zugriffe in Abhängigkeit der Berechtigungen zu den personenbezogenen Daten zu erlauben.

14. Computer-Programm-Produkt mit einem Programmcode zur Ausführung des Verfahrens nach Anspruch 13, wenn der Programmcode auf einem Computersystem ausgeführt wird.

## Claims

1. A system (100) for managing personal data assigned to identities (106), comprising:
a first security device (101) and a second security device (103), which are each configured to collect personal data and to assign the personal data to identities (106) and to store the collected personal data locally; and
a management system, which is configured to manage permissions to the identities (106);
wherein the first security device (101) and the second security device (103) are each configured to log accesses to the locally stored personal data locally, wherein the first security device (101) and the second security device (103) are configured to allow the accesses depending on the permissions to the personal data.

2. The system (100) according to claim 1, wherein the first security device (101) and the second security device (103) are arranged spatially separated.

3. The system (100) according to one of the preceding claims, wherein the first security device (101) and the second security device (103) are configured to store the logged accesses locally in a secure structure, in particular a blockchain structure.

4. The system (100) according to one of the preceding claims, wherein the first security device (101) and the second security device (103) are configured to store the recorded personal data locally and anonymized.

5. The system (100) according to one of the preceding claims, wherein the first security device (101) and the second security device (103) are configured to release the recorded personal data to an operator (108).

6. The system (100) according to one of the preceding claims, wherein the first security device (101) and the second security device (103) are configured to anonymize the personal data depending on a permission, which can be assigned to the identity (106) to which the personal data are assigned.

7. The system (100) according to any of the preceding claims, wherein the management system is configured to manage the permissions based on an authorization of an identity (106).

8. The system (100) according to any of the preceding claims, wherein the management system is configured to release the permissions and identities (106) of the first security device (101) and/or the second security device (103).

9. The system (100) according to any of the preceding claims, wherein the management system is configured to provide permissions and identities (106) with a certificate and wherein the first security device (101) and the second security device (103) are each configured to authenticate certificates of retrieved or received permissions and/or identities (106).

10. The system (100) according to claim 9, wherein the first security device (101) and the second security device (103) are each configured to refuse a response to a request if the request does not include a certificate that is authenticable by the first security device (101) and/or the second security device (101).

11. The system (100) according to one of the preceding claims, wherein the first security device (101) and the second security device (103) are configured to store, in addition to locally stored personal data, information about the identity (106), which can be assigned to the personal data.

12. The system (100) according to any of the preceding claims, wherein the management system is configured to manage the managed permissions with respect to an operator (108), in particular an identity (106) or a process.

13. A method for managing personal data assigned to identities (106), comprising:
- collecting personal data by a first security device (101) or a second security device (103), assigning the collected personal data to identities (106) and locally storing the collected personal data by the first security device (101) when the first security device (101) has collected the personal data or the second security device (102) when the second security device (101) has collected the personal data;
- managing permissions to the identities (106) by a management system;
- logging accesses to the locally stored personal data by the first security device (101) and/or the second security device (103) locally, wherein the first security device (101) and the second security device (103) are configured to allow accesses depending on the permissions to the personal data.

14. A computer program product comprising program code for executing the method according to claim 13, when the program code is executed on a computer system.

## Revendications

1. Un système (100) de gestion des données à caractère personnel attribuées à des identités (106), comprenant :
un premier dispositif de sécurité (101) et un deuxième dispositif de sécurité (103), chacun étant configuré pour collecter des données personnelles et attribuer des identités (106) et pour stocker localement les données personnelles collectées ; et
un système de gestion, configuré pour gérer les permissions relatives aux identités (106) ;
dans lequel le premier dispositif de sécurité (101) et le deuxième dispositif de sécurité (103) sont chacun configurés pour enregistrer localement les accès aux données personnelles stockées localement, dans lequel le premier dispositif de sécurité (101) et le deuxième dispositif de sécurité (103) sont configurés pour autoriser les accès en fonction des permissions sur les données personnelles.

2. Le système (100) selon la revendication 1, dans lequel le premier dispositif de sécurité (101) et le deuxième dispositif de sécurité (103) sont disposés spatialement séparés.

3. Le système (100) selon l'une des revendications précédentes, dans lequel le premier dispositif de sécurité (101) et le deuxième dispositif de sécurité (103) sont configurés pour stocker localement les accès enregistrés dans une structure sécurisée, notamment une structure blockchain.

4. Le système (100) selon l'une des revendications précédentes, dans lequel le premier dispositif de sécurité (101) et le deuxième dispositif de sécurité (103) sont configurés pour stocker localement et de manière anonymisée les données personnelles enregistrées.

5. Le système (100) selon l'une des revendications précédentes, dans lequel le premier dispositif de sécurité (101) et le deuxième dispositif de sécurité (103) sont configurés pour transmettre les données personnelles enregistrées à un opérateur (108).

6. Le système (100) selon l'une des revendications précédentes, dans lequel le premier dispositif de sécurité (101) et le deuxième dispositif de sécurité (103) sont configurés pour anonymiser les données personnelles en fonction d'une permission, qui peut être attribuée à l'identité (106) à laquelle les données personnelles sont attribuées.

7. Le système (100) selon l'une quelconque des revendications précédentes, dans lequel le système de gestion est configuré pour gérer les permissions sur la base d'une autorisation d'une identité (106).

8. Le système (100) selon l'une quelconque des revendications précédentes, dans lequel le système de gestion est configuré pour libérer les permissions et les identités (106) du premier dispositif de sécurité (101) et/ou du deuxième dispositif de sécurité (103).

9. Le système (100) selon l'une quelconque des revendications précédentes, dans lequel le système de gestion est configuré pour fournir des permissions et des identités (106) avec un certificat et dans lequel le premier dispositif de sécurité (101) et le deuxième dispositif de sécurité (103) sont chacun configurés pour authentifier les certificats des permissions et/ou identités (106) récupérées ou reçues.

10. Le système (100) selon la revendication 9, dans lequel le premier dispositif de sécurité (101) et le deuxième dispositif de sécurité (103) sont chacun configurés pour refuser une réponse à une requête si la requête ne comprend pas un certificat authentifiable par le premier dispositif de sécurité (101) et/ou le deuxième dispositif de sécurité (103).

11. Le système (100) selon l'une des revendications précédentes, dans lequel le premier dispositif de sécurité (101) et le deuxième dispositif de sécurité (103) sont configurés pour stocker, en plus des données personnelles stockées localement, des informations sur l'identité (106), qui peuvent être attribuées aux données personnelles.

12. Le système (100) selon l'une quelconque des revendications précédentes, dans lequel le système de gestion est configuré pour gérer les permissions gérées par rapport à un opérateur (108), en particulier une identité (106) ou un processus.

13. Un procédé de gestion des données à caractère personnel attribuées à des identités (106), comprenant :
- la collecte de données personnelles par un premier dispositif de sécurité (101) ou un deuxième dispositif de sécurité (103), l'attribution des données personnelles collectées à des identités (106) et le stockage local des données personnelles collectées par le premier dispositif de sécurité (101) lorsque le premier dispositif de sécurité (101) a collecté les données personnelles ou par le deuxième dispositif de sécurité (102) lorsque le deuxième dispositif de sécurité (101) a collecté les données personnelles ;
- la gestion des permissions d'accès aux identités (106) par un système de gestion ;
- enregistrement des accès aux données personnelles stockées localement par le premier dispositif de sécurité (101) et/ou le deuxième dispositif de sécurité (103) localement, dans lequel le premier dispositif de sécurité (101) et le deuxième dispositif de sécurité (103) sont configurés pour autoriser les accès en fonction des permissions sur les données personnelles.

14. Un produit de programme informatique comprenant un code de programme pour exécuter la méthode selon la revendication 13, lorsque le code de programme est exécuté sur un système informatique.
